# EUROPÄISCHE PATENTANMELDUNG

(11) **EP 0 551 593 A1**
(43) Veröffentlichungstag der Anmeldung: **21.07.1993**
(21) Anmeldenummer: 92119852.9
(22) Anmeldetag: 21.11.1992
(51) Int. Cl.: C22B 11/00, C22B 3/44

(54) **Verfahren zur Abtrennung von Rhodium aus organischen Lösungen**

(30) Priorität: 15.01.1992 DE 4200844
(71) Anmelder: DEGUSSA AG, D-60311 Frankfurt (DE)
(72) Erfinder: Gerner, Roland, W-6458 Rodenbach (DE); Kleinwächter, Ingo, W-6450 Hanau 9 (DE); Kleiss, Karlheinz, W-6464 Linsengericht (DE)

(57) **Zusammenfassung**

Zur Abtrennung von Rhodium aus organischen Lösungen, organisch-wässrigen Mischungen oder wässrigen Lösungen die Komplexbildner enthalten, wird bei 50 bis 250^{o} C als Fällungsmittel metallisches Wismut, Wismutoxid, Wismuthydroxid oder eine andere reduzierbare Wismutverbindung, gegebenenfalls mit einem Reduktionsmittel zugesetzt und der Niederschlag aufgearbeitet. Anstelle von Wismut können auch die entsprechenden Antimonverbindungen eingesetzt werden.

## Beschreibung

Die Erfindung betrifft ein Verfahren zur Abtrennung von Rhodium aus organischen Lösungen, organisch-wässrigen Mischungen und aus wässrigen Lösungen, die komplexierende organische Verbindungen enthalten, durch Fällung bei höheren Temperaturen.

In der Industrie fallen in vielen Bereichen wäßrige und nichtwässrige Rhodiumlösungen an, aus denen das Rhodium unter möglichst weitgehender Abtrennung anwesender Begleitstoffe, wie Salze oder schwerflüchtiger organischer Verbindungen, gewonnen werden muß. Insbesondere sind dies Rückstände aus der Rhodium-Homogenkatalyse, verbrauchte Lösungen aus der Galvanik oder Mutterlaugen aus der Produktion rhodiumorganischer Verbindungen. Die möglichst quantitative Rückgewinnung des Rhodiums aus diesen Abfallösungen liefert oft einen großen Beitrag zur Rentabilität der mit dem Rhodium durchgeführten Prozesse. Probleme bei der quantitativen Rückgewinnung des Rhodiums aus Abfallösungen treten immer dann auf, wenn das Rhodium in einer organischen oder organisch/wässrigen Lösung vorliegt oder durch starke Komplexbildner in wässriger Lösung gehalten wird.

Der bekannteste Prozeß zur Rückgewinnung des Rhodiums aus Recyclingmaterialien oder aus Konzentraten der Primärproduktion ist die naßchemische Scheidung.

Dazu werden die Materialien in eine wässrige, salzsaure Lösung überführt, aus denen das Rhodium gegebenenfalls nach Abtrennung der anderen Edelmetalle, durch Fällung als Ammoniumhexachlororhodat abgetrennt wird. Die nach der Ammmoniumfällung in Lösung verbleibenden Reste des Rhodiums werden durch Reduktion bzw. Zementation abgetrennt. Dieses Verfahren hat den Nachteil, daß es eine Überführung des gesamten Materials in eine salzsäure, wässrige Lösung voraussetzt und daß die Abtrennung des Rhodium, vor allem bei Vorliegen von größeren Beimengen an Unedelmetall- oder Halbmetallsalzen nicht quantitativ ist. Bei gleichzeitiger Anwesenheit anderer reduzierbarer Metalle ist die selektive Abtrennung des Rhodiumrestgehaltes durch Zementation nicht möglich. Enthält die wässrige, salzsaure Lösung weitere stark komplexierende Komponenten, ist sowohl die Ammoniumfällung als auch die Zementation nicht quantitativ durchführbar.

Eine Aufarbeitung organischer Rhodiumlösungen oder organisch/wässriger Lösungen ist nach diesem Verfahren nicht möglich.

Beim Vorliegen von Beimengungen in den Rhodiumlösungen, wie Unedelmetallsalzen, Neutralsalzen, Komplexbildner oder organischen, hochsiedenen Verbindungen, kann die Einführung der edelmetallhaltigen Abfallösungen in einen Hüttenprozeß ein brauchbarer Aufarbeitungsweg sein. Diese Verfahren sind aber in der Regel aufwendig und können das Rhodium nicht quantitativ zurückgewinnen.

Auch ist die Verarbeitung größerer Mengen brennbarer organischer Verbindungen über Hüttenprozesse nur bedingt möglich.

Zur Aufarbeitung brennbarer, rhodiumhaltiger Abfälle kann auch zunächst die organische Matrix verbrannt und das Rhodium dann aus der verbleibenden Asche aufgearbeitet werden. Luftverschmutzung, die Restgehalte an unerwünschten Elementen in der Asche, sowie Rhodiumverluste beim Verbrennen sind die Nachteile bei diesem Verfahren.

In der DE-PS 32 23 501 wird ein Verfahren beschrieben, bei dem die Edelmetalle aus wässrigen und nichtwässrigen Lösungen durch die Umsetzung mit Tellur oder reduzierbaren Tellurverbindungen gefällt und aus dem Fällungsniederschlag gewonnen werden. Dieses Verfahren hat den Nachteil, daß es nicht für alle rhodiumhaltigen Materialien generell einsetzbar ist, daß Tellur gelegentlich in größeren, die Weiterverarbeitung störenden Mengen in das Lösungsmittel übergeht, und daß sich bei der Umsetzung leichtflüchtige und stark riechende Tellurverbindungen bilden können, die die Handhabung erschweren, zur Beeinträchtigung der Umwelt führen und eventuell toxisch sind. Das bei der Aufarbeitung von rhodiumhaltigen organischen Materialien nach diesem Verfahren anfallende Tellur/Rhodiumkonzentrat muß vor der Aufarbeitung auf Rhodium durch Abbrennen von der anhaftenden Organik befreit werden. Das dabei entstehende Tellurdioxid ist flüchtig und führt, neben Tellurverlusten, zu Problemen bei der Abgasbehandlung.

Es war daher Aufgabe der vorliegenden Erfindung, ein Verfahren zur Abtrennung von Rhodium aus organischen Lösungen, organisch/wässrigen Mischungen und aus wässrigen Lösungen, die komplexierende Verbindung enthalten, durch Fällung bei höheren Temperaturen zu finden, das leicht durchführbar, generell einsetzbar ist und mit hoher Edelmetallausbeute arbeitet, ohne daß es bei der Aufarbeitung der Konzentrate und der sonstigen Reaktionsprodukte zu Schwierigkeiten kommt.

Diese Aufgabe wird erfindungsgemäß dadurch gelöst, daß als Fällungsmittel metallisches Wismut, Wismutoxid, Wismuthydroxid, andere reduzierbare Wismutverbindungen, metallisches Antimon, Antimonoxid, Antimonhydroxid oder ander reduzierbare Antimonverbindungen, gegebenenfalls zusammen mit einem Reduktionsmittel eingesetzt und die Fällung bei 50 bis 250^{o} C durchgeführt wird.

Vorzugsweise wird die Fällung bei 150 bis 200^{o} C durchgeführt. Bei niedrigsiedenden Lösungsmitteln muß die Fällung dann in einem Druckbehälter erfolgen.

Vorteilhafterweise erfolgt die Fällung mit Wismutoxid oder Wismuthydroxid.

Wirkt die ursprüngliche organische oder wässrige Rhodiumlösung nicht reduzierend genug, wird ein Reduktionsmittel, wie Ascorbinsäure, Ameisensäure oder in wässriger Lösung Natriumsulfit zugesetzt. Wässrige Lösungen werden vorzugsweise mit Schwefelsäure oder Essigsäure leicht sauer gestellt.

Überraschenderweise stellt feinverteiltes Wismut bzw. Antimon, welches den Lösungen zugesetzt wird, oder in der Lösung durch Reduktion von Wismut- bzw. Antimonverbindungen erzeugt wird, ein geeignetes Fällmittel dar. Auch aus Lösungen, aus denen das Rhodium durch die klassischen Fäll- und Zementationsverfahren nicht quantitativ abgetrennt werden kann, weil das Rhodium in komplexierter Form oder in organischer bzw. organisch/wässriger Lösung vorliegt, kann mit diesem Verfahren eine quantitative Rhodiumrückgewinnung erreicht werden. Gegenüber den bekannten Verfahren zeichnet sich die Fällung mit Wismut (Antimon) oder Wismutverbindungen (Antimonverbindungen) durch eine einfache Durchführung, eine hohe Ausbeute und eine generelle Anwendbarkeit aus. Probleme, wie unangenehme, die weitere Aufarbeitung oder Handhabung der Produkte und Reststoffe störende, bzw. toxische oder umweltunverträgliche Reaktionsnebenprodukte treten bei der Durchführung des Verfahrens mit Wismut oder Wismutverbindungen nicht auf. Da Antimonoxid als krebserzeugender Arbeitsstoff eingestuft ist, ist unter dem Aspekt der Umweltverträglichkeit des Verfahrens das Arbeiten mit Wismut vorzuziehen.

Die entstehenden Wismut(Antimon)/Rhodiumniederschläge können in bekannter Weise aufgearbeitet werden, wobei sowohl das Rhodium als auch der Wismut (Antimon) quantitativ zurückgewonnen werden kann. Das eingesetzte Wismut (Antimon) wird von organischen Abfallösungen nicht aufgenommen, so daß diese nach der Rhodiumabtrennung bedenkenlos verbrannt werden können.

Die Fällungsniederschläge aus organischen Lösungen können zur Entfernung der anhaftenden Organik ebenfalls problemlos abgebrannt werden, da Wismut (Antimon) keine leichtflüchtigen Oxide bildet.

Das erfindungsgemäße Verfahren ist sowohl für wässrige Rhodiumlösungen, die außerdem noch weitere Unedelmetallkationen und Anionen, wie Halogenide, Cyanide, Sulfate, Thisulfate oder Phsophate, enthalten können, als auch für organische Lösungen und wässrig/organische Mischungen anwendbar, die beispielsweise Alkohole, Aldehyde, organische Säuren, Kohlenwasserstoffe oder auch phosphororganische und schwefelorganische Verbindungen sowie halogenierte organische Verbindungen enthalten können.

Die Menge der Fällungsmittelzugabe (als Verbindung oder elementar) richtet sich nach dem Rhodiumgehalt und der Lösungsmenge und kann, wie auch geeignete Reaktionstemperatur und Zeit sowie Reduktionsmittelzugabe, durch einfache Versuche ermittelt werden.

Folgende Beispiele sollen das erfindungsgemäße Verfahren näher erläutern:
1. 300 ml eines organischen Rückstandes aus der Oxosynthese, der 750 ppm Rhodium enthält, wird 4h bei 200^{o} C mit 5 g Wismutoxid gerührt. Der Niederschlag wird abfiltriert und auf Rhodium aufgearbeitet. Das Filtrat enthält <5 ppm Rhodium, Wismut ist nicht nachweisbar.
2. 300 ml eines wässrigen, organische Salze und Komplexbildner enthaltenden Rückstandes aus der Homogenkatalyse mit 2400 ppm Rhodium wird mit Schwefelsäure auf ca. pH=2 eingestellt und 12h mit 5 g Wismutoxid unter Rückfluß gekocht. Der Niederschlag wird abfiltriert und auf Rhodium aufgearbeitet. Das Filtrat enthält <5 ppm Rhodium.
3. 300 ml eines organischen Rückstandes aus der Oxosynthese, der 750 ppm Rhodium enthält, wir 12h bei 200^{o} C mit 10 g feinverteilten Wismut gerührt. Der Niederschlag wird abfiltriert und auf Rhodium aufgearbeitet. Das Filtrat enthält < 5 ppm Rhodium, Wismut ist nicht nachweisbar.
4. 300 ml einer wässrigen Rhodiummutterlauge aus der Produktion rhodiumorganischer Verbindungen mit 200 ppm Rhodium, die neben Wasser noch Acethylaceton, Ethanol, und Dimethylformamid enthält, wird mit Schwefelsäure auf pH=2 eingestellt und 12h mit 5 g Wismutoxid in einem Autoklaven bei 150^{o} C gerührt. Der Niederschlag wird abfiltriert und auf Rhodium aufgearbeitet. Das Filtrat enthält <5 ppm Rhodium.
5. 300 ml eines organischen Rückstandes aus der Oxosynthese, der 750 ppm Rhodium enthält, wird 4h bei 200^{o} C mit 5 g Antimonoxid gerührt. Der Niederschlag wird abfiltriert und auf Rhodium aufgearbeitet. Das Filtrat enthält <5 ppm Rhodium, Antimon ist nicht nachweisbar.

## Patentansprüche

1. Verfahren zur Abtrennung von Rhodium aus organischen Lösungen, organisch-wässrigen Mischungen und aus wässrigen Lösungen, die kompexierende organische Verbindungen enthalten, durch Fällung bei höheren Temperaturen,
dadurch gekennzeichnet,
daß als Fällungsmittel metallisches Wismut, Wismutoxid, Wismuthydroxid, andere reduzierbare Wismutverbindungen, metallisches Antimon, Antimonoxid, Antimonhydroxid oder andere reduzierbare Antimonverbindungen, gegebenenfalls zusammen mit einem Reduktionsmittel eingesetzt, und die Fällung bei 50 bis 250^{o} C durchgeführt wird.

2. Verfahren zur Abtrennung von Rhodium nach Anspruch 1,
dadurch gekennzeichnet,
daß die Fällung bei 150 bis 200^{o} C durchgeführt wird.

3. Verfahren zur Abtrennung von Rhodium nach Anspruch 1 oder 2,
dadurch gekennzeichnet,
daß die Fällung in einem Druckbehälter erfolgt.
